# EUROPÄISCHE PATENTSCHRIFT

(11) **EP 2 070 402 B1**
(45) Veröffentlichungstag und Bekanntmachung des Hinweises auf die Patenterteilung: **28.08.2019**
(21) Anmeldenummer: 07123138.5
(22) Anmeldetag: 13.12.2007
(51) Int. Cl.: A01B 45/02

(54) **Bodenbelüftungsvorrichtung**
Soil aeration device
Dispositif d'aération des sols

(43) Veröffentlichungstag der Anmeldung: 17.06.2009
(73) Patentinhaber: Redexim Handel- en Exploitatie Maatschappij B.V., 3702 AC Zeist (NL)
(72) Erfinder: De Bree, Cornelius Hermanus Maria, 3971 ND Driebergen (NL)
(74) Vertreter: dompatent von Kreisler Selting Werner - Partnerschaft von Patent- und Rechtsanwälten mbB

(56) Entgegenhaltungen:
- EP-A- 0 195 103
- EP-A- 1 210 853
- US-A- 3 802 513

## Beschreibung

Die Erfindung betrifft eine Bodenbelüftungsvorrichtung nach dem Oberbegriff des Anspruch 1.

Derartige bisher aus EP 0 195 103 A1 bekannte Bodenbelüftungsvorrichtung weisen einen Maschinenrahmen, mehrere auf- und abbewegbare Stechwerkzeuge, zwei Hinterräder und ein Vorderrad auf. In Fahrtrichtung hinter dem Vorderrad befinden sich mehrere nebeneinander angeordnete Stechwerkzeuge. Die Stechwerkzeuge bestimmen die Breite einer Bearbeitungsbahn auf dem Boden. Die Hinterräder laufen seitlich neben der Bearbeitungsbahn.

Bei den bisher bekannten Bodenbelüftungsvorrichtungen besteht der Nachteil, dass die Hinterräder seitlich neben der Bearbeitungsbreite angeordnet sind. Dadurch überfahren die Hinterräder beim Bearbeiten einer Bodenfläche, wie z.B. einer Rasenfläche, bereits bearbeiteten Boden. Die Stechwerkzeuge der Bodenbelüftungsvorrichtung heben beim Bearbeiten des Bodens Erdmaterial aus. Diese Erdmaterial bleibt auf dem bereits bearbeiteten Boden liegen. Wenn nun die Hinterräder bei der Bearbeitung einer benachbarten Spur den bereits bearbeiteten Boden überfahren, wird das ausgehobene Erdmaterial auf der Bodenoberfläche flachgedrückt und in die ausgehobenen Löcher wieder hineingedrückt, womit die bereits bearbeitete Bodenfläche erheblich verschmutzt wird und ein anschließendes Kehren der Bodenoberfläche durch anhaftendes Erdmaterial erschwert wird. Der Erfindung liegt demzufolge die Aufgabe zugrunde, eine Bodenbelüftungsvorrichtung der eingangs beschriebenen Art zu verbessern, bei der bei Bearbeitung einer Bodenfläche die vorgenannten Nachteile nicht mehr auftreten.

Zur Lösung dieser Aufgabe dienen die Merkmale des Anspruchs 1.

Die Erfindung sieht in vorteilhafter Weise vor, dass ein Bodenbelüftungsvorrichtung der einleitend beschriebenen Art mindestens eine quer zur Fahrtrichtung verlaufende Stützeinrichtung aufweist, die in Fahrtrichtung vor den Stechwerkzeugen angeordnet ist und relativ zu dem Boden derart höhenverstellbar ist, dass in einer Arbeitsstellung die Hinterräder angehoben und der Maschinenrahmen auf der Stützeinrichtung und dem mindestens einen Vorderrad abgestützt ist, so dass weder die Vorder- oder Hinterräder, noch die Stützeinrichtung den von den Stechwerkzeugen bereits bearbeiteten Boden überfahren, und dass in einer Transportstellung die Stützeinrichtung angehoben und der Maschinenrahmen von den Hinterrädern und dem mindestens einen Vorderrad getragen ist. Die Gesamtbreite der Stützeinrichtung entspricht maximal der Breite der Bearbeitungsbahn.

Dies hat den Vorteil, dass weder Vorder- oder Hinterräder, noch die Stützeinrichtung der Bodenbelüftungsvorrichtung, wenn sie sich in der Arbeitsstellung befinden, den bereits bearbeiteten Boden überfahren.

Ein zusätzlicher Vorteil ist, dass in der Transportstellung der Maschinenrahmen weiterhin auf den Hinterrädern und dem Vorderrad abgestützt ist. Die Hinterräder sind seitlich neben der Bearbeitungsbreite angeordnet. Dadurch ist die Kippgefahr der Bodenbelüftungsvorrichtung auf unebenem Gelände verringert.

Die Stützeinrichtung ist mittig quer zur Fahrtrichtung in Bezug auf die Bearbeitungsbreite angeordnet.

Die Stützeinrichtung kann aus mindestens einer Walze bestehen. Alternativ könnte dies auch mindestens eine Stützrolle oder mindestens eine Kufe sein.

Die mindestens eine Stützrolle oder Walze kann auf der Mantelfläche ein Profil aufweisen. Dies können z.B. Nocken sein. Dadurch hat die Stützrolle oder die Walze auch auf nassem Untergrund einen besseren Griff.

Die mindestens eine Stützrolle oder die Walze kann um mindestens eine Drehachse in einem Verstellrahmen drehbar gelagert sein. Die Drehachse verläuft parallel zum Boden und vorzugsweise orthogonal zur Fahrtrichtung. Der Verstellrahmen ist seinerseits um mindestens eine Schwenkachse an dem Maschinenrahmen schwenkbar gelagert. Die Schwenkachse verläuft parallel zum Boden und vorzugsweise orthogonal zur Fahrtrichtung. Der Verstellrahmen mit Stützeinrichtung kann mit Hilfe der Verstelleinrichtung derart um die Schwenkachse geschwenkt werden, dass die Höhe der Stützeinrichtung einstellbar ist.

Die Stützeinrichtung kann hohl sein. Die Stützeinrichtung kann beispielsweise aus einem Leichtmetall, wie zum Beispiel Aluminium, Titan oder einer Legierung der vorgenannten Metalle oder anderer Metalle bestehen.

Dies hat den Vorteil, dass die Stützeinrichtung leicht ist und die Gewichtsbelastung für den zu bearbeitenden Boden gering gehalten werden kann.

Die Stützeinrichtung kann mit einem Polymer beschichtet sein. Das Polymer kann aus vulkanisiertem Gummi bestehen.

Die Stützeinrichtung kann mit Hilfe einer Verstelleinrichtung höhenverstellbar sein, wobei die Verstelleinrichtung hydraulisch, mechanisch oder elektrisch antreibbar ist.

Die Stützeinrichtung und die Stechwerkzeuge können gleichzeitig mit Hilfe der Verstelleinrichtung derart höhenverstellbar sein, dass in Arbeitsstellung der Maschinenrahmen auf der Stützeinrichtung und dem mindestens einen Vorderrad abgestützt ist und gleichzeitig die Stechwerkzeuge in den Boden einstechbar und wieder herausziehbar sind.

Es können mehrere Stützeinrichtungen quer zur Fahrtrichtung nebeneinander angeordnet sein.

Die mehreren nebeneinander angeordneten Stützrollen oder Walzen können separat voneinander gelagert sein. Dies hat den Vorteil, dass die Stützrollen oder Walzen unterschiedliche Winkelgeschwindigkeiten aufweisen können und dadurch Kurven besser durchfahren werden können.

Bei einem weiteren Ausführungsbeispiel kann die Stützeinrichtung um eine vertikale Schwenkachse schwenkbar sein. Bei einem weiteren Ausführungsbeispiel können mehrere Elemente der Stützeinrichtung um jeweils eine vertikale Schwenkachse schwenkbar sein. Alternativ kann auch jeweils eine Gruppe von mehreren nebeneinander angeordneten Elementen der Stützeinrichtung um eine vertikale Schwenkachse schwenkbar sein.

Im Folgenden werden unter Bezugnahme auf die Zeichnungen Ausführungsbeispiele der Erfindung näher erläutert. Es zeigen schematisch:
- Fig. 1a und 1b: ein Ausführungsbeispiel mit vertikaler Höhenverstellung,
- Fig. 2a und 2b: ein weiteres Ausführungsbeispiel mit Höhenverstellung,
- Fig. 3a und 3b: ein drittes Ausführungsbeispiel für eine Höhenverstellung,
- Fig. 4a und 4b: die Hinteransicht der Fig. 3a und 3b,
- Fig. 5a und 5b: ein viertes Ausführungsbeispiel für die Höhenverstellung,
- Fig. 6: eine Walze als Stützeinrichtung,
- Fig. 7: zwei nebeneinander angeordnete Walzen,
- Fig. 8: zwei nebeneinander angeordnete Walzen, die um eine vertikale Achse schwenkbar sind,
- Fig. 9: zwei nebeneinander angeordnete Walzen, die separat voneinander um jeweils eine vertikale Achse schwenkbar sind,
- Fig. 10: mehrere nebeneinander angeordnete Walzen,
- Fig. 11: mehrere nebeneinander angeordnete Walzen, die um eine vertikale Achse schwenkbar sind,
- Fig. 12: zwei nebeneinander angeordnete Gruppen von Walzen, die jeweils um eine vertikale Achse schwenkbar sind.

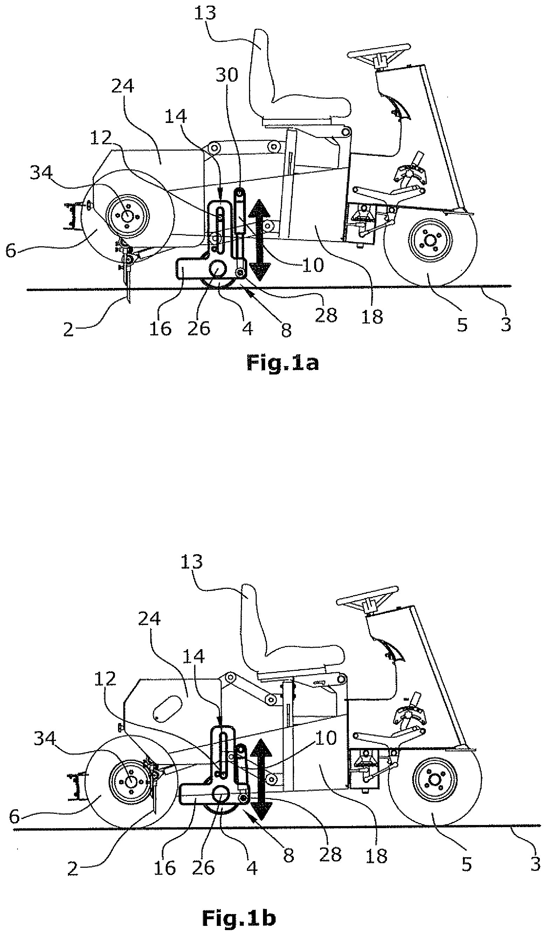

Fig. 1a und 1b zeigen eine selbstfahrende Bodenbelüftungsvorrichtung 1. Die Bodenbelüftungsvorrichtung 1 weist einen Maschinenrahmen 18, mehrere auf- und abbewegbare Stechwerkzeuge 2, mindestens zwei Hinterräder 6, mindestens ein Vorderrad 5 und eine Stützeinrichtung auf. Das Vorderrad 5 der Bodenbelüftungsvorrichtung 1 wird durch einen hier nicht dargestellten Antrieb, vorzugsweise einem Verbrennungsmotor, angetrieben. Die Stützeinrichtung besteht aus einer Walze 4 und ist mit Hilfe einer Verstelleinrichtung 8 relativ zum Boden 20 höhenverstellbar. Die Verstelleinrichtung 8 weist einen Verstellrahmen 16 auf. An dem Verstellrahmen 16 ist um eine parallel zum Boden und vorzugsweise orthogonal zur Fahrtrichtung verlaufende Schwenkachse 28 ein Hydraulikzylinder 10 schwenkbar gelagert. Der Hydraulikzylinder ist auf der anderen Seite an dem Maschinenrahmen 18 um eine weitere parallel zum Boden und vorzugsweise orthogonal zur Fahrtrichtung verlaufende Schwenkachse 30 schwenkbar gelagert. Die Verstelleinrichtung wird mit Hilfe des Hydraulikzylinders 10 angetrieben. Ein Verstellnocken 12, der an dem Maschinenrahmen 18 befestigt ist, wird in einem in dem Verstellrahmen 16 angeordneten, vertikal verlaufenden Langloch 14 geführt. Die Stützeinrichtung ist derart höhenverstellbar, dass in einer Arbeitsstellung, die in Fig. 1a dargestellt ist, die Hinterräder 6 angehoben sind und der Maschinenrahmen 18 auf der Stützeinrichtung abgestützt ist und in einer Transportstellung, die in Fig. 1b dargestellt ist, die Stützeinrichtung angehoben und der Maschinenrahmen 18 von den Hinterrädern 6 getragen ist.

Weiter weist die Bodenbelüftungsvorrichtung 1 einen Werkzeugrahmen 24 auf, der wiederum mehrere nebeneinander angeordnete, nicht dargestellte Führungselemente aufweist. An den Führungselementen sind jeweils, ebenfalls nicht dargestellte, Werkzeughalter schwenkbar gelagert, wobei die Werkzeughalter jeweils ein Stechwerkzeug 2 oder eine Gruppe von Stechwerkzeugen 2 aufnimmt. In der Arbeitsstellung, wie sie in Fig. 1a dargestellt ist, sind die Stechwerkzeuge 2 mit Hilfe einer Verschwenkeinrichtung derart verschwenkt worden, dass die Stechwerkzeuge 2 in den Boden 20 einstechbar und wieder herausziehbar sind. Die Stechwerkzeuge 2 können mit Hilfe der Verschwenkeinrichtung relativ zu Boden 20 angehoben bzw. abgesenkt werden. Die Verschwenkeinrichtung für die Stechwerkzeuge 2 und die Verstelleinrichtung 8 für die Stützeinrichtung können unabhängig voneinander betrieben werden. Die Stechwerkzeuge 2 werden aufgrund einer durch einen nicht dargestellten Antrieb, vorzugsweise einen Kurbelwellenantrieb, angetriebenen Auf- und Abbewegung abwechselnd in den Boden 20 eingedrückt und führen in dem Boden 20 aufgrund der Vorwärtsbewegung der Bodenbelüftungsvorrichtung 1 eine Kippbewegung aus, wodurch der Boden 20 unterhalb des Einstechlochs aufgebrochen wird. Auf diese Weise wird beispielsweise die Drainage des Bodens 20 verbessert und die optimale Belüftung des Bodens 20 sichergestellt. Zudem wird das gesunde Wachstum der Gräser gefördert und der Einsatz von chemischen Düngemitteln reduziert.

In der Transportstellung, die in Fig. 1b dargestellt ist, sind die Stechwerkzeuge 2 mit dem Werkzeugrahmen 24 mit Hilfe der Verschwenkeinrichtung derart verschwenkt worden, dass die Stechwerkzeuge 2 weder den Boden 20 berühren noch in diesen einstechbar sind. Die Verschwenkeinrichtung und die Verstelleinrichtung 8 sind derart aufeinander abgestimmt, dass die Stechwerkzeuge 2 nur dann in den Boden 20 einstechbar sind, wenn sich die Bodenbelüftungsvorrichtung 1 in der Arbeitsstellung befindet.

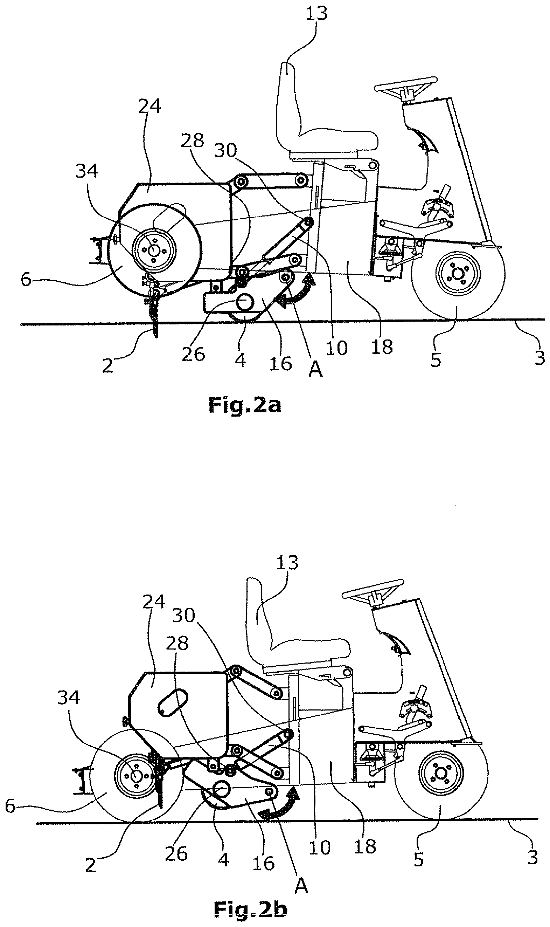

Fig. 2a und 2b zeigen ein weiteres Ausführungsbeispiel der erfindungsgemäßen Bodenbelüftungsvorrichtung 1. In Fig. 2a ist die Bodenbelüftungsvorrichtung 1 in Arbeitsstellung und in Fig. 2b in Transportstellung dargestellt. Gegenüber den Fig. 1a und 1b unterscheidet sich dieses Ausführungsbeispiel darin, dass die Verstelleinrichtung 8 anders aufgebaut ist. Die Stützeinrichtung besteht aus zwei nebeneinander angeordneten Elementen. Diese Elemente sind Walzen 4. Die Verstelleinrichtung 8 weist einen Verstellrahmen 16 auf, an dem um eine parallel zum Boden und vorzugsweise orthogonal zur Fahrtrichtung verlaufende Drehachse 26 die zwei nebeneinander angeordneten Walzen 4 drehbar gelagert sind. Der Verstellrahmen 16 ist um eine ebenfalls parallel zum Boden und vorzugsweise orthogonal zur Fahrtrichtung verlaufende Schwenkachse A an dem Rahmen 18 schwenkbar gelagert. Mindestens ein Hydraulikzylinder 10 ist um eine Schwenkachse 28 an dem Verstellrahmen 16 schwenkbar gelagert. Die andere Seite des Hydraulikzylinders 10 ist um ein weitere Schwenkachse 30 an dem Maschinenrahmen 18 schwenkbar gelagert. Die beiden Schwenkachsen 28, 30 verlaufen ebenfalls parallel zum Boden und vorzugsweise orthogonal zur Fahrtrichtung. Der Verstellrahmen 16 ist mit Hilfe des Hydraulikzylinders 10 um die Schwenkachse A derart schwenkbar, dass in einer Arbeitsstellung, siehe Fig. 2a, der Maschinenrahmen 18 auf den Walzen 4 und dem Vorderrad 5 abgestützt ist und in einer Transportstellung, siehe Fig. 2b, die Walzen 4 angehoben und der Maschinenrahmen 18 von den Hinterrädern 6 und dem Vorderrad 5 getragen ist. Die Verschwenkeinrichtung der Stechwerkzeuge 2 ist mit der Verstelleinrichtung 8 gekoppelt. Sie sind derart gekoppelt, dass die Stechwerkzeuge nur in Arbeitssteilung in den Boden 20 einstechbar sind.

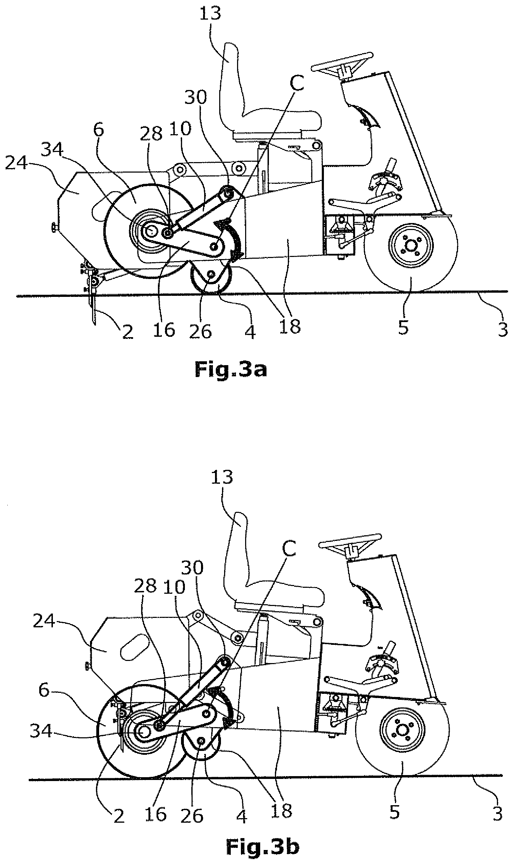

Fig. 3a und 3b zeigen ein weiteres Ausführungsbeispiel mit einer weiteren Verstelleinrichtung 8. Zwei nebeneinander angeordnete Walzen 4 sind um eine parallel zum Boden und vorzugsweise orthogonal zur Fahrtrichtung verlaufende Drehachse 26 an dem Maschinenrahmen 18 drehbar gelagert. Der Verstellrahmen 16 der Verstelleinrichtung 8 ist um eine ebenfalls parallel zum Boden und vorzugsweise orthogonal zur Fahrtrichtung verlaufende Schwenkachse C an dem Maschinenrahmen 18 schwenkbar gelagert. An dem Verstellrahmen 16 ist um eine Schwenkachse 28 der Hydraulikzylinder 10 schwenkbar gelagert. Der Hydraulikzylinder 10 ist auf der anderen Seite um eine weitere Schwenkachse 30 an dem Maschinenrahmen 18 schwenkbar gelagert. Die Schwenkachsen 28, 30 verlaufen ebenfalls parallel zum Boden und vorzugsweise orthogonal zur Fahrtrichtung. Die Hinterräder 6 sind um eine parallel zum Boden und vorzugsweise orthogonal zur Fahrtrichtung verlaufende Drehachse 34 an dem Verstellrahmen 16 drehbar gelagert. Bei Betätigung des Hydraulikzylinders 10 werden die Hinterräder 6 um die Schwenkachse C geschwenkt, sodass die Hinterräder 6 in Bezug auf den Boden 20 angehoben werden und die Walzen 4 gegenüber dem Boden gesenkt werden. In der Arbeitsstellung in Fig. 3a ist der Maschinenrahmen 18 auf den Walzen 4 und dem Vorderrad 5 gestützt.

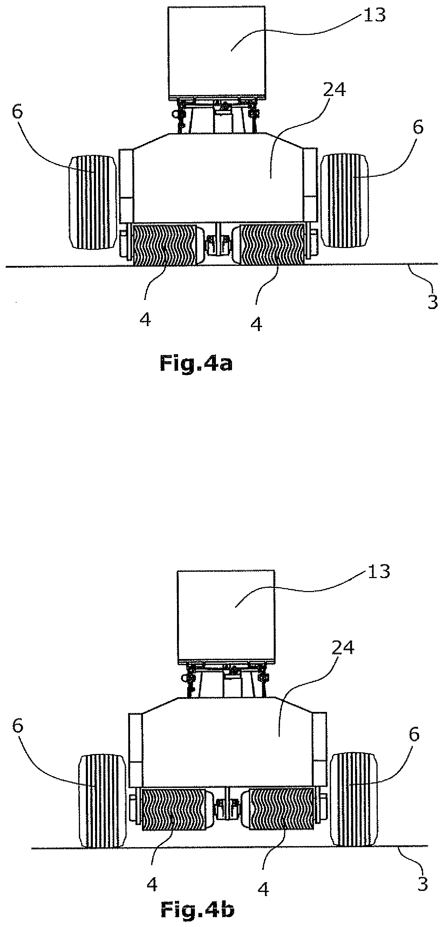

Fig. 4a und 4b zeigen das Ausführungsbeispiel aus den Fig. 3a und 3b in der Hinteransicht. Fig. 4a zeigt die Bodenbelüftungsvorrichtung 1 in Arbeitsstellung. Die Hinterräder 6 sind angehoben und berühren den Boden 20 nicht. Der Maschinenrahmen 18 ist auf den Walzen 4 abgestützt. Die Walzen 4 sind separat voneinander gelagert, sodass die Walzen 4 unterschiedliche Winkelgeschwindigkeiten aufweisen können. Dies ist insbesondere bei Kurvenfahrt von Vorteil. Die Walzen 4 weisen ein Profil auf. Die Walzen 4 können mit einer Polymerschicht ummantelt sein. Diese Polymerschicht kann eine vulkanisierte Gummischicht sein.

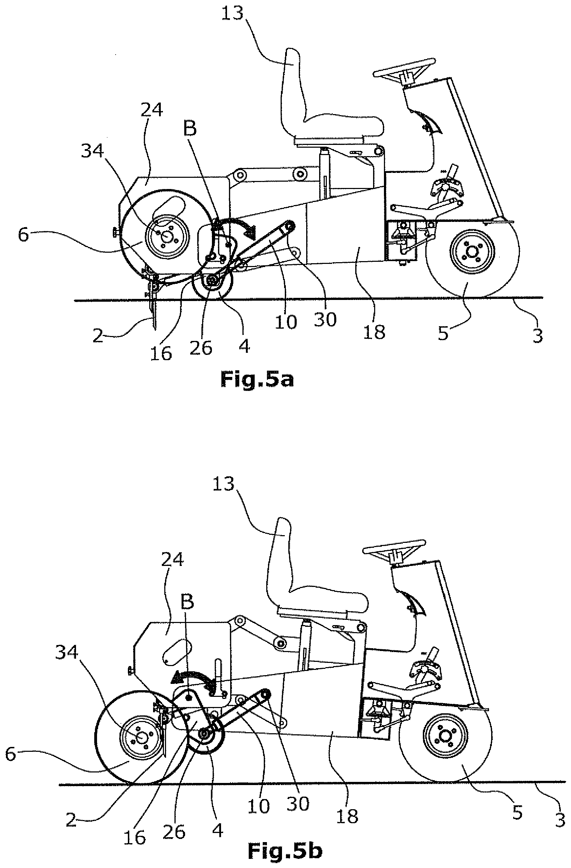

Fig. 5a und 5b zeigen ein weiteres Ausführungsbeispiel. Die Walzen 4 sind um eine parallel zum Boden und vorzugsweise orthogonal zur Fahrtrichtung verlaufende Drehachse 26 an dem Verstellrahmen 16 drehbar gelagert. Die erste Drehachse 26 fällt mit der Schwenkachse 28 zusammen, um die der Hydraulikzylinder 10 an dem Verstellrahmen 16 schwenkbar gelagert ist. An der anderen Seite ist der Hydraulikzylinder 10 um die fünfte Schwenkachse 30 an dem Maschinenrahmen 18 schwenkbar gelagert. Die Schwenkachsen 28, 30 verlaufen ebenfalls parallel zum Boden und vorzugsweise orthogonal zur Fahrtrichtung. Der Verstellrahmen 16 ist um eine parallel zum Boden und vorzugsweise orthogonal zur Fahrtrichtung verlaufende Schwenkachse B an dem Maschinenrahmen 18 schwenkbar gelagert. Die Hinterräder 6 sind um eine parallel zum Boden und vorzugsweise orthogonal zur Fahrtrichtung verlaufende Drehachse 34 ebenfalls an dem Verstellrahmen 16 drehbar gelagert. Durch Betätigung des Hydraulikzylinders 10 verschwenkt der Verstellrahmen 16 um die Schwenkachse B. Dadurch werden gleichzeitig die Hinterräder 6 und die Walzen 4 um die Schwenkachse B verschwenkt. Auf diese Weise kann zwischen der Arbeitsstellung, in Fig. 5a dargestellt, und der Transportstellung, in Fig. 5b dargestellt, gewechselt werden.

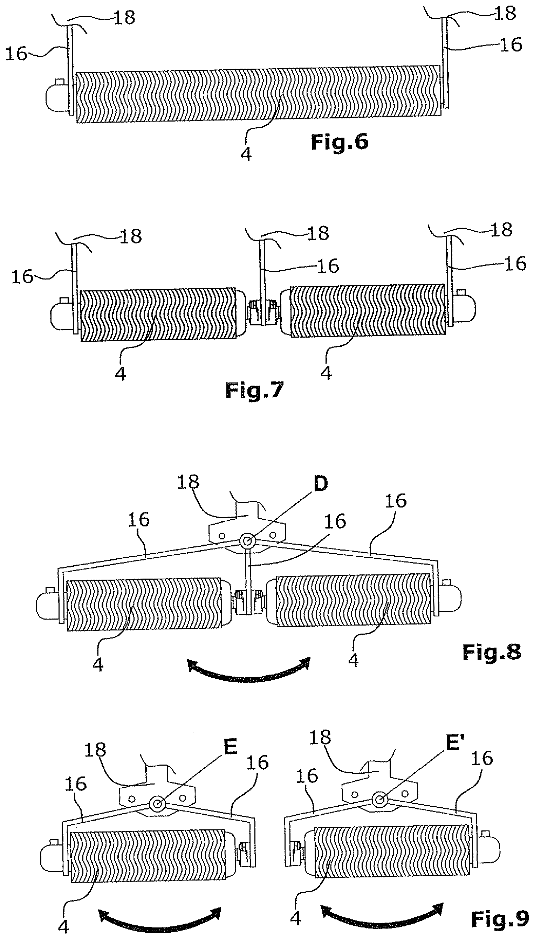

Fig. 6 bis Fig. 12 zeigen verschiedene Ausführungsformen für die Walze 4, bzw. die Walzen 4. Die verschiedenen Ausführungsformen der Walzen 4 können mit den verschiedenen Ausführungsformen der Verstelleinrichtungen 8, die in den Fign. 1a,1b bis 5a,5b dargestellt sind, kombiniert werden. In Fig. 6 ist eine Walze 4 dargestellt, die um eine parallel zum Boden und vorzugsweise orthogonal zur Fahrtrichtung verlaufende Drehachse 26 in dem Verstellrahmen 16 drehbar gelagert ist. Die Walze 4 weist auf der Mantelfläche ein Profil auf, damit die Walze 4 einen besseren Griff auf dem Boden hat und nicht durchdreht.

Die nebeneinander angeordneten Walzen 4 der in den Fig. 6 bis 12 dargestellten Ausführungsbeispiele können aufgrund einer entsprechenden elastischen Lagerung unabhängig voneinander in vertikaler Richtung und/oder in Fahrtrichtung beweglich sein und/oder um eine vertikale Achse unabhängig voneinander schwenkbar sein. Auf diese Weise können sich die Walzen einer unebenen Bodenfläche optimal anpassen.

Fig. 7 zeigt zwei nebeneinander angeordnete Walzen 4, die ebenfalls um eine parallel zum Boden und vorzugsweise orthogonal zur Fahrtrichtung verlaufende Drehachse 26 an den Verstellrahmen 16 drehbar gelagert sind. Die Walzen 4 sind unabhängig voneinander gelagert, sodass diese unterschiedliche Winkelgeschwindigkeiten aufweisen können. Dies ist insbesondere bei Kurvenfahrt von Vorteil.

Fig. 8 zeigt zwei nebeneinander angeordnete Walzen 4, die ebenfalls um eine parallel zum Boden verlaufende Drehachse 26 an den Verstellrahmen 16 drehbar gelagert sind. Der Verstellrahmen 16 ist um eine vertikale sechste Schwenkachse D schwenkbar gelagert. Dadurch können die Walzen 4 den Kurvenverlauf bei Kurvenfahrt besser folgen.

In Fig. 9 sind zwei nebeneinander angeordnete Walzen 4 jeweils um eine vertikale Schwenkachse E, E' schwenkbar gelagert.

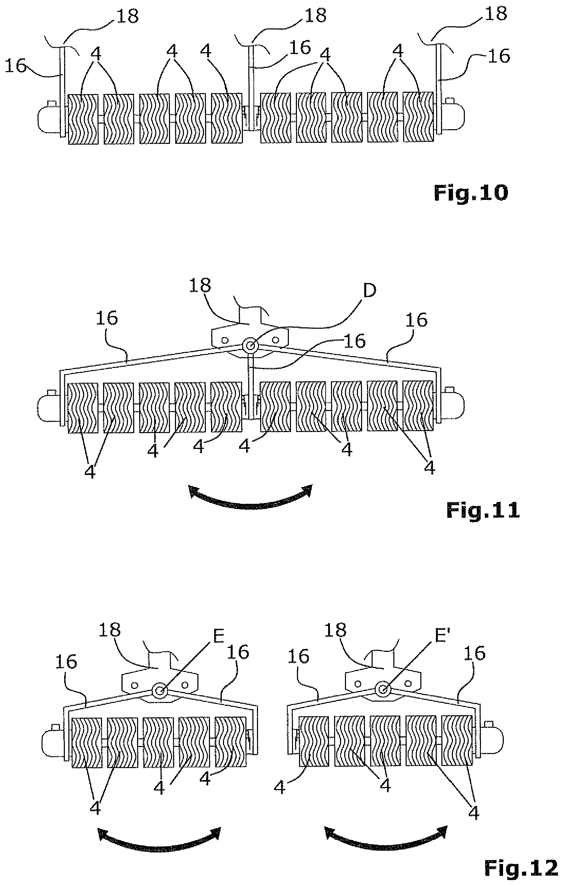

In Fig. 10 sind mehrere Walzen 4 um eine erste eine parallel zum Boden verlaufende Drehachse 26 an dem Verstellrahmen 16 drehbar gelagert. Die Walzen sind separat voneinander gelagert, sodass diese unterschiedliche Winkelgeschwindigkeiten aufweisen können, was bei Kurvenfahrt vorteilhaft ist.

Fig. 11 ist eine Kombination aus dem Ausführungsbeispiel aus Fig. 10 und dem aus Fig. 8. Mehreren nebeneinander angeordneten Walzen 4 sind drehbar um eine parallel zum Boden verlaufende Drehachse an einem Verstellrahmen 16 gelagert, der wiederum um eine vertikale Schwenkachse D schwenkbar an dem Maschinenrahmen 18 gelagert ist.

Fig. 12 zeigt eine Kombination aus dem Ausführungsbeispiel aus Fig. 10 und dem aus Fig. 9. Zwei Gruppen von nebeneinander angeordneten Walzen 4 sind nebeneinander angeordnet und jeweils um eine parallel zum Boden verlaufende Drehachse an einem Verstellrahmen 16 drehbar gelagert, der wiederum jeweils um eine vertikale Schwenkachse E, E' an dem Maschinenrahmen 18 schwenkbar gelagert ist.

## Patentansprüche

1. Selbstfahrende Bodenbelüftungsvorrichtung mit
- einem Maschinenrahmen (18),
- mehreren auf- und abbewegbaren Stechwerkzeugen (2), die quer zur Fahrtrichtung nebeneinander angeordnet sind und die Breite einer Bearbeitungsbahn auf dem Boden (3) bestimmen,
- mindestens zwei Hinterräder (6), die seitlich neben der Bearbeitungsbahn laufen, und
- mindestens einem Vorderrad (5), das in Fahrtrichtung vor den Stechwerkzeugen (2) angeordnet ist,
wobei eine quer zur Fahrtrichtung verlaufende Stützeinrichtung in Fahrtrichtung vor den Stechwerkzeugen (2) angeordnet ist und relativ zu dem Boden (3) derart höhenverstellbar ist, dass in einer Arbeitsstellung die Hinterräder (6) angehoben und der Maschinenrahmen (18) auf der Stützeinrichtung und dem mindestens einen Vorderrad (5) abgestützt ist, so dass weder die Vorder- oder Hinterräder (6), noch die Stützeinrichtung den von den Stechwerkzeugen (2) bereits bearbeiteten Boden (3) überfahren, und dass in einer Transportstellung die Stützeinrichtung angehoben und der Maschinenrahmen (18) von den Hinterrädern (6) und dem mindestens einen Vorderrad (5) getragen ist, **dadurch gekennzeichnet, dass** die Stützeinrichtung mittig quer zur Fahrtrichtung in Bezug auf die Bearbeitungsbreite angeordnet ist.

2. Bodenbelüftungsvorrichtung nach Anspruch 1, **dadurch gekennzeichnet, dass** die Gesamtbreite der Stützeinrichtung maximal der Breite der Bearbeitungsbahn der Stechwerkzeuge (2) entspricht.

3. Bodenbelüftungsvorrichtung nach einem der Ansprüche 1 bis 2, **dadurch gekennzeichnet, dass** die Stützeinrichtung aus mindestens einer Walze (4) besteht.

4. Bodenbelüftungsvorrichtung nach einem der Ansprüche 1 bis 2, **dadurch gekennzeichnet, dass** Stützeinrichtung aus mindestens einer Stützrolle besteht.

5. Bodenbelüftungsvorrichtung nach Anspruch 3 oder 4, **dadurch gekennzeichnet, dass** die Stützeinrichtung auf der Mantelfläche Nocken aufweist.

6. Bodenbelüftungsvorrichtung nach einem der Ansprüche 3 bis 5, **dadurch gekennzeichnet, dass** die Stützeinrichtung um mindestens eine parallel zum Boden und vorzugsweise orthogonal zur Fahrtrichtung verlaufende Drehachse (26) an ein einem Verstellrahmen (16) drehbar gelagert ist, wobei der Verstellrahmen (16) seinerseits um ebenfalls mindestens eine parallel zum Boden und vorzugsweise orthogonal zur Fahrtrichtung verlaufend Schwenkachse an dem Maschinenrahmen (18) schwenkbar gelagert ist, wobei der Verstellrahmen (16) mit der Stützeinrichtung mit Hilfe einer Verstelleinrichtung (8) derart um die Schwenkachse schwenkbar ist, dass die Höhe der Stützeinrichtung einstellbar ist.

7. Bodenbelüftungsvorrichtung nach einem der Ansprüche 1 bis 6, **dadurch gekennzeichnet, dass** mehrere Elemente der Stützeinrichtung quer zur Fahrtrichtung nebeneinander angeordnet sind.

8. Bodenbelüftungsvorrichtung nach einem der.Ansprüche 1 bis 7, **dadurch gekennzeichnet, dass** die Stützeinrichtung bzw. die Elemente der Stützeinrichtung um eine vertikale Schwenkachse schwenkbar sind.

9. Bodenbelüftungsvorrichtung nach Anspruch 7 oder 8, **dadurch gekennzeichnet, dass** jedes Element der Stützeinrichtung um jeweils eine vertikale Schwenkachse schwenkbar ist.

10. Bodenbelüftungsvorrichtung nach einem der Ansprüche 7 bis 9, **dadurch gekennzeichnet, dass** jeweils eine Gruppe von mehreren nebeneinander angeordneten Elementen der Stützeinrichtung um eine vertikale Schwenkachse schwenkbar ist.

## Claims

1. A self-propelled soil aeration device comprising:
- a machine frame (18),
- a plurality of upwardly and downwardly movable piercing tools (2) which are arranged next to each other transversely to the direction of travel and which define the width of a working path on the soil (3),
- at least two rear wheels (6) which run laterally alongside the working path, and
- at least one front wheel (5) which is arranged in front of the piercing tools (2) as seen in the direction of travel,
wherein a supporting device extending transversely to the direction of travel is arranged in front of the piercing tools (2), as seen in the direction of travel, and is vertically adjustable with respect to the soil (3) such that in a working position, the rear wheels (6) are raised and the machine frame (18) is supported on the supporting device and the at least one front wheel (5) so that neither the front or rear wheels (6), nor the supporting device travel over the soil (3) already worked by the piercing tools (2), and that in a transport position, the supporting device is raised and the machine frame (18) is supported by the rear wheels (6) and the at least one front wheel (5),
**characterized in that**
the supporting device is arranged centrally and transversely to the direction of travel with respect to the working width.

2. The soil aeration device of claim 1, **characterized in that** the total width of the supporting device corresponds at most to the width of the working path of the piercing tools (2).

3. The soil aeration device of one of claims 1 to 2, **characterized in that** the supporting device is formed by at least one roll (4).

4. The soil aeration device of one of claims 1 to 2, **characterized in that** the supporting device is formed by at least one supporting roller.

5. The soil aeration device of claim 3 or 4, **characterized in that** the supporting device has cams on the shell surface.

6. The soil aeration device of one of claims 3 to 5, **characterized in that** the supporting device is supported at an adjusting frame (16) for rotation about at least one rotational axis (26) that is parallel to the soil and preferably orthogonal to the direction of travel, said adjusting frame (16) itself also being supported at the machine frame (18) for pivotal movement about at least one pivot axis that is parallel to the soil and preferably orthogonal to the direction of travel, said adjusting frame (16), together with the supporting device, being pivotable about said pivot axis by means of an adjusting means (8) such that the height of the supporting device is adjustable.

7. The soil aeration device of one of claims 1 to 6, **characterized in that** a plurality of elements of the supporting device are arranged side by side transversely to the direction of travel.

8. The soil aeration device of one of claims 1 to 7, **characterized in that** the supporting device or the elements of the supporting device are pivotable about a vertical pivot axis.

9. The soil aeration device of claim 7 or 8, **characterized in that** each element of the supporting device is pivotable about a respective vertical pivot axis.

10. The soil aeration device of one of claims 7 to 9, **characterized in that** a respective set of a plurality of supporting device elements arranged side by side is pivotable about a respective vertical axis.

## Revendications

1. Dispositif automoteur d'aération des sols doté
- d'un châssis de machine (18),
- de plusieurs outils perforateurs (2) déplaçables en va-et-vient, lesquels sont agencés l'un à côté de l'autre transversalement à la direction de déplacement et déterminent la largeur d'une bande de traitement sur le sol (3),
- au moins deux roues arrière (6) latérales à côté de la bande de traitement, et
- au moins une roue avant (5), agencée devant les outils perforateurs (2) dans la direction de déplacement,
dans lequel un moyen de support transversal à la direction de déplacement est agencé devant les outils perforateurs (2) dans la direction de déplacement et est réglable en hauteur par rapport au sol (3) de telle sorte que dans une position de travail les roues arrières (6) sont relevées et le châssis de machine (18) est supporté sur le moyen de support et sur l'au moins une roue avant (5), de sorte que ni les roues avant ou arrières (6) ni le moyen de support ne roulent sur le sol (3) déjà traité par les outils perforateurs (2), et en ce que dans une position de transport le moyen de support est relevé et le châssis de machine (18) est porté par les roues arrières (6) et par l'au moins une roue avant (5),
**caractérisé en ce que** le moyen de support est agencé transversalement à la direction de déplacement et au milieu par rapport à la largeur de traitement.

2. Dispositif automoteur d'aération des sols selon la revendication 1, **caractérisé en ce que** la largeur totale du moyen de support correspond au maximum à la largeur de la bande de traitement des outils perforateurs (2).

3. Dispositif automoteur d'aération des sols selon l'une des revendications 1 à 2, **caractérisé en ce que** le moyen de support est constitué d'au moins un cylindre (4) .

4. Dispositif automoteur d'aération des sols selon l'une des revendications 1 à 2, **caractérisé en ce que** le moyen de support est constitué d'au moins un rouleau de support.

5. Dispositif automoteur d'aération des sols selon la revendication 3 ou 4, **caractérisé en ce que** le moyen de support comporte des cames sur la surface enveloppante.

6. Dispositif automoteur d'aération des sols selon l'une des revendications 3 à 5, **caractérisé en ce que** le moyen de support est disposé en rotation autour d'au moins un axe de rotation (26) parallèle au sol et de préférence orthogonal à la direction de déplacement sur un châssis réglable (16), dans lequel le châssis réglable (16) est pour sa part également disposé en pivotement sur le châssis de machine (18) autour d'au moins un axe de pivot parallèle au sol et de préférence orthogonal à la direction de déplacement, dans lequel le châssis réglable (16) peut pivoter avec le moyen de support, à l'aide d'un moyen de réglage (8), autour de l'axe de pivot de telle sorte que la hauteur du moyen de support est réglable.

7. Dispositif automoteur d'aération des sols selon l'une des revendications 1 à 6, **caractérisé en ce que** plusieurs éléments du moyen de support sont agencés en juxtaposition et transversalement à la direction de déplacement.

8. Dispositif automoteur d'aération des sols selon l'une des revendications 1 à 7, **caractérisé en ce que** le moyen de support ou les éléments du moyen de support peuvent pivoter autour d'un axe de pivot vertical.

9. Dispositif automoteur d'aération des sols selon la revendication 7 ou 8, **caractérisé en ce que** chaque élément du moyen de support peut pivoter autour d'un axe de pivot vertical respectif.

10. Dispositif automoteur d'aération des sols selon l'une des revendications 7 à 9, **caractérisé en ce qu'**un groupe de plusieurs éléments du moyen de support agencés en juxtaposition peut respectivement pivoter autour d'un axe de pivot vertical.
